(19) Europäisches Patentamt
European Patent Office
Office européen des brevets

(11) **EP 4 016 327 A1**

(12) **EUROPEAN PATENT APPLICATION**

(43) Date of publication:
**22.06.2022 Bulletin 2022/25**

(21) Application number: **20215583.4**

(22) Date of filing: **18.12.2020**

(51) International Patent Classification (IPC):
*G06F 16/28* (2019.01)

(52) Cooperative Patent Classification (CPC):
**G06F 16/285**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Banks and Acquirers International Holding**
**75015 Paris (FR)**

(72) Inventors:
• **Klaver, Jan**
**2241SH Wassenaar (NL)**
• **Parareda, Xavier**
**2011 LK Haarlem (NL)**

(74) Representative: **Vidon Brevets & Stratégie**
**16B, rue de Jouanet**
**BP 90333**
**35703 Rennes Cedex 7 (FR)**

(54) **METHOD OF PROCESSING DATA FROM A DATA SOURCE, APPARATUS AND COMPUTER PROGRAM**

(57) The invention relates to a method of processing data from a data source, said processing method being implemented via an electronic device for processing data sources, said data source being in the form of a database comprising at least one table, said at least one table comprising at least one column, said method comprising the following steps:
- An extraction step (A01) of metadata from said at least one table, delivering, on the one hand, a set of data representative of statistics relating to the content of said at least one table (DBs) and, on the other hand, a set of column headers names (ColH) of said at least one table; and
- A compilation step (B02) of at least part of the data representative of statistics of said set of data representative of statistics, delivering enriched statistical data (ESD);
- A classification step (B03), via a text classification module, from the set of column headers names of said at least one table, the classification step (B03) delivering, for each column of said at least one table, data representing a probability that each column belongs to a preliminary data category (PreDC); and
- For each column belonging to a preliminary data category, a prediction step (C04), from enriched statistical data (ESD) *and* data representing the probability of each column belonging to a preliminary data category (PreDC), delivering a membership score for each column to belong to a predetermined category (DC).

Figure 1

**Description**

**1. Domain**

The invention relates to data categorization. More specifically, the invention relates to method and device enabling data categorization with no knowledge of data to categorize. The invention finds a natural application in processing where data knowledge is not authorized for example for judicial matters or reglementary constraints.

**2. Related Art**

The advent of the General Data Protection Regulation (henceforth GDPR) has made it necessary for organizations to have detailed knowledge of where personal data lies within their data collections. Due to the often-large size of these collections, manual labelling of each column is impractical, inconsistent and of low quality, which has led to the creation of many products that automate this task. These products usually use natural language processing techniques (henceforth NLP) to analyse the contents of the tables and columns. With this natural language processing techniques, process allows determining a class of the data, table by table and column by column. Inside a database, some tables will be classified as personal while other will not.

While this is generally not a problem when performed within an organizational unit, there are situations where reluctance to share data between two parties can slow down the analysis or prevent it from happening altogether. An obvious example of this is an organization providing analysis as a service to another, where the recipient of the service might have highly sensitive information that cannot be shared outside the organization. Another example could consist of different departments within the same organization with different levels of data access rights (e.g. an IT department providing the analysis to a Finance department); although it can be circumvented, granting permissions and other forms of bureaucracy make it difficult to create a streamlined process.

NLP techniques, however, suffer a major drawback: NLP techniques for labelling data in databases is mainly based on the analysis of data. This means that access to the data is required and that NLP technique is considered Personal Data processing under GDPR.

Moreover, NLP techniques can typically only be applied for data in a production situation weeks or months after a new development has been implemented, since NLP techniques necessitates access to data. This means it is not possible to obtain information on personal data after a certain amount of time, and in consequence that potentially obtaining of information on personal data contained in a new data source or database may occur a long time after some data have been disclosed to unauthorized parties.

Thus, there is a need for having a process which is fast, reliable and not classified as GDPR Personal Data processing.

**3. Summary of the Invention**

The inventors kept this problem in mind while defining the invention. More specifically, the disclosure relates to a method of processing data from a data source, said processing method being implemented via an electronic device for processing data sources, said data source being in the form of a database comprising at least one table, said at least one table comprising at least one column. According to the disclosure the method comprises the following steps:

- An extraction step of metadata from said at least one table, delivering, on the one hand, a set of data representative of statistics relating to the content of said at least one table and, on the other hand, a set of column headers names of said at least one table; and
- A compilation step of at least part of the data representative of statistics of said set of data representative of statistics, delivering enriched statistical data;
- A classification step, via a text classification module, from the set of column headers names of said at least one table, the classification step delivering, for each column of said at least one table, data representing a probability that each column belongs to a preliminary data category; and
- For each column belonging to a preliminary data category, a prediction step, from enriched statistical data *and* data representing the probability of each column belonging to a preliminary data category, delivering a membership score for each column to belong to a predetermined category.

Thanks to this process, it is thus possible to obtain information on the category of the data, while not inspecting them.

According to the disclosure, said set of data representative of statistics relating to the content of said at least one table obtained in said metadata extraction step comprises, for a current column having a current column header name:

- number of instances in the current column NiCC;
- number of distinct values in the current column NdVCC;
- number of null/empty values in the current column NnVCC.

According to the disclosure, obtaining said enriched statistical data obtained by the compilation step of at least part of the data representative of statistics of said set of data representative of statistics comprises calculating, for a current column having a current column header name, a Distinct Ratio DR in the form:

$$DR = \frac{NdVCC}{NiCC - NnVCC}$$

According to the disclosure, obtaining said enriched statistical data obtained by the compilation step of at least part of the data representative of statistics of said set of data representative of statistics comprises calculating, for a current column having a current column header name, a Percentage of nulls PN in the form:

$$PN = \frac{NnVCC}{NiCC}$$

According to the disclosure, the classification step, by means of a text classification module, from the set of column headers names of said at least one table comprises feeding each column header name to a pretrained text classification module as a function of a context of said table and/or said database to which each column belongs.

According to the disclosure, at least part of the probabilities that some column belongs to a preliminary data category are used as input of said text classification module so as to increase accuracy of said text classification module.

According to the disclosure, the prediction step comprises, for a current column of said set of column headers, feeding said data representing the probability that said current column belongs to a preliminary data category and said enriched statistical data of said current column to pretrained Random Forest classifier module.

According to the disclosure, at least part of the probabilities that some column belongs to a predetermined data category are used as input of Random Forest classifier module so as to increase accuracy of said Random Forest classifier module.

According to the disclosure, the process is implemented in real time by monitoring changes made in a data structure of said database.

According to the disclosure, said extraction step of metadata comprise connecting to the data source thru the use of an API, said API preventing unauthorized access to content of said data source.

The invention also relates to an electronic device for processing data from a data source, said data source being in the form of a database comprising at least one table, said at least one table comprising at least one column, said device comprising:

- extraction means of metadata from said at least one table, delivering, on the one hand, a set of data representative of statistics relating to the content of said at least one table and, on the other hand, a set of column headers names of said at least one table; and
- compilation means of at least part of the data representative of statistics of said set of data representative of statistics, delivering enriched statistical data;
- a text classification module, delivering, from the set of column headers names of said at least one table, for each column of said at least one table, data representing a probability that each column belongs to a preliminary data category; and
- a prediction module, which for each column belonging to a preliminary data category, delivers a membership score for each column to belong to a predetermined category, using enriched statistical data and data representing the probability of each column belonging to a preliminary data category.

According to one implementation, the different steps of the method according to the disclosure are implemented by one or more software programs or software module programs including software instructions intended for execution by at least one data processor of a device connected to directly or indirectly to the automatic speech recognition system.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for processing data with respect to the disclosure.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for processing data with respect to the disclosure.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. Brief description of the drawings

Embodiments of the present disclosure can be better understood with reference to the following description and drawings, given by way of example and not limiting the scope of protection, and in which:

- **Figure 1** is a flow chart for illustrating the general principle of the proposed technique;
- **Figures 2** is a flow chart for illustrating a system implementing the proposed technique;
- **Figure 3** is a schematic block diagram illustrating an example of a device, according to an embodiment of the present disclosure.

The components in the figures are not necessarily to scale, emphasis instead being placed upon illustrating the principles of the disclosure.

### 5. Description of embodiments

5.1. General embodiment

As a general consideration, as exposed herein above, the invention relates to a method that analyses columns in tabular databases, or the equivalent thereof, in order to detect the presence of personal data without accessing the data itself. The column names and certain database statistics are used as inputs for a combination of statistics processing and machine learning algorithms.

A pre-trained text classifier is used to extract meaning (preliminary data category) from the column names, and its output is combined with some specific database statistics. A random forest classifier is then used to create a final prediction (the inclusion of the column header in a predetermined category, for instance "personal data"). As previously explained, because viewing (and analysing) the data itself is not necessary, it is possible to analyse sensitive information without accessing it. Analysis can also be provided as a service to an external party without said party needing to grant access to their data, which allows solving several problems in data processing, e.g., personal data processing, but not only.

Thus, the proposed method uses only related metadata in order to conduct the analysis, therefore not needing direct access to the data that is analysed. Besides overcoming the aforementioned challenges, if the analysis is performed in this manner (without accessing the data), the exercise is not considered personal data processing according to the GDPR definition (see article 4.2 of the Regulation (EU) 2016/679 of the European Parliament and of the council of 27). Regulations similar to GDPR have recently been announced in several other countries, e.g. Brazil and the US state of California.

The process hereby proposed can also discover new created columns with possible personal data as soon as the column is added in a development environment. This allows for much earlier detection of personal data, therefore contributing significantly to implementation of GDPR principles like Privacy by Design and Personal Data minimization.

The early detection of Personal Data can save on implementation costs:

- The right security measures can timely be implemented before having introduced the development in a production environment and later have to fix an incorrect personal data implementation
- By early reconsidering the use of personal data items for certain processing.

The early detection, in a development or preproduction environment, is important because it's not something that can easily be done by the development teams themselves: development of application implies involvement of many parties, whose do not necessarily have knowledge of final objectives of an application or a program. These teams, whose may also be geographically distributed often base the development on specification which may be general level specification. Hence, teams themselves have not a general knowledge of how the data managed by application will be implemented in a database. This may, for example, be a consequence of the use in the development environment, of programs, compilers or optimizer which will transform an initial view or specification, in a kind of deep "machine" implementation, not necessarily checked by the developer himself.

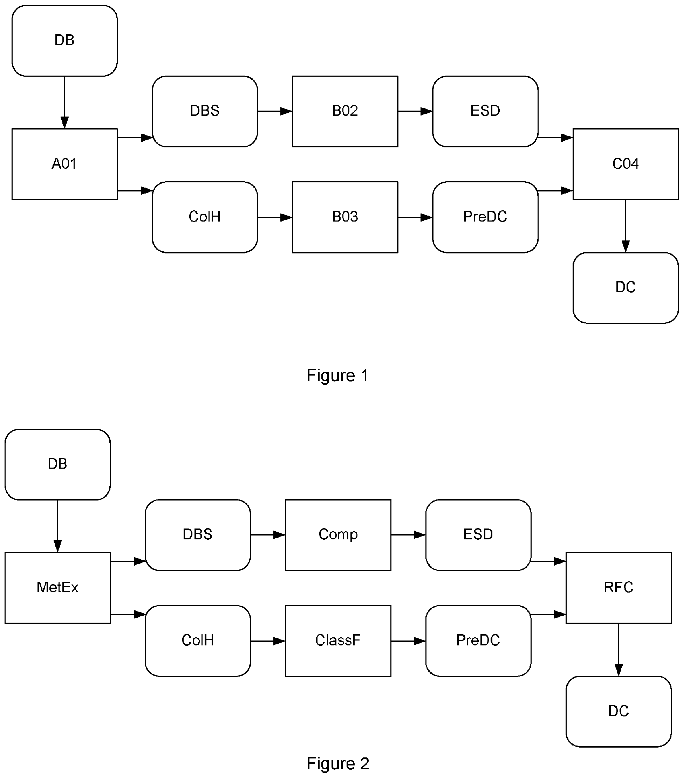

For achieving these results, the disclosure, described in relation with figure 1, relates to a method of processing data from a data source, the processing method being implemented via an electronic device for processing data sources, the data source being in the form of a database comprising at least one table, the at least one table comprising at least one column, the method comprising the following steps:

- an extraction step (A01) of metadata from the at least one table, delivering, on the one hand, a set of data representative of statistics relating to the content of the at least one table (DBs) and, on the other hand, a set of column headers names (ColH) of the at least one table; and
- a compilation step (B02) of at least part of the data representative of statistics of the set of data representative of statistics, delivering enriched statistical data (ESD);
- a classification step (B03), via a classifier, from the set of column headers names of the at least one table, the classification step delivering, for each column of the at least one table, data representing a probability that each column belongs to a preliminary data category; and
- for each column belonging to a preliminary data category, a prediction step (C04), from enriched statistical data (ESD) *and* data representing the probability of each column belonging to a preliminary data category (PreDC), delivering a membership score for each column to belong to a predetermined category (DC).

One can note that the proposed method is not limited to database analysis: it can also be implemented in equivalent datasets, for example xml files, using xml description scheme. The main requirement for achieving the desired results is to have a data source in which there's a description of data (*e.g. name attributed to the piece of data*) and where some statistics can be built on the dataset, or the interesting part of the dataset, relatively to said description of data or piece of data. For convenience, one will refer to: a *"table"* for dealing to a dataset; to a *"column"* for dealing to a part of a dataset related to a subset of a given type; to a *"column header"* for the attributed name of a column.

An important point of the disclosure relates to the fact that it implements two different element classification steps, which, when combined, allows obtaining results which are of good accuracy. Another important point of the disclosure is that the second classification step use both the results of the first classification step and some specific data statistics obtained from the table, relatively to a column header.

Figure 2 shows the general architecture of a system according to the disclosure. From a data source (dataset), statistics and the names of the column headers are extracted by a meta data extractor module (MetEx). The meta data extractor module (MetEx) can take the form of an interface module which will connect to one or several API (application programming interface) of the data source. Advantageously, these API can be configured so as to only allow specific actions from the meta data extractor module (MetEx), preventing, by configuration, access to content of data, which ensure compliance relative to GDPR requirement. If the database is not tabular, as already explained, an equivalent can be used, e.g. a descriptor of the field instead of the column name.

The (basic) data statistics are enriched by a compiler module (Comp). The compiler module (Comp) is in charge of deriving, from, basic data statistics, enriched statistics (ESD), which are, by constructions, calculations made on the basics data statistics, so as to obtain one or more specific indexes or ratios.

The column headers are fed into a text classifier (ClassF) which outputs an element representing a preliminary data category. This element representing a preliminary data category can, e.g. be a single (mono dimensional) number between 0 and 1, representing the probability of the column name referring to preliminary data category (*e.g personal data*). It can also be one or several couples of labels (multidimensional) associated to a probability between 0 and 1 (e.g. {*'personal data':'0,3'}*, and/or {*'production doto':'0,2*) and/or {*'technical doto':'0,5*} and/or {*'network doto':'0,2)*, etc.).

This output of the text classifier (*ClassF*) module, together with the enriched statistics, are used as inputs for a random forest classifier (*RFC*) module, which in turn outputs a final projection (DC), either in a mono dimensional projection space or in a multidimensional projection space, as a function of the format of the input of the preliminary data category. In a mono dimensional projection space, the projection result may be represented as a number between 0 and 1 of a current column header of the table to belong to the predetermined category (e.g. *'personal data',* etc.).

On the basis of this or these results, one has two options. The first one consists, for example in a development environment, to let a user takes a final decision relatively to the data of the current column of the table: either labelled it as the result obtained by the technique of the invention, or disregard the classification made by the by the technique of the invention. Whatever the user does, the results may be reinjected in the decisions parameters of the text classifier (ClassF) module and/or the random forest classifier (RFC) module so as to improve the next iterations of the method.

In addition, according to a specific feature of the disclosure, the current method may be implemented in a continuous surveillance program (*i.e. in real time),* to monitor changes made on structure of datasets. Thus, once a first initialisation process is run according to the disclosure, for all or a predetermined part of a dataset, a continuous process can be implemented for tracking changes of the structure of a dataset and/or addition of new data in a dataset and deciding of the category of newly added data and/or modifications made on the data structure.

In addition, according to the disclosure, since the process is run for all or a predetermined part of a dataset, and that the output of the process is a projection for a given column header belonging to a table, the projections are added to a data structure, for example a specific table of a database, comprising, for each column, the table, the value of the column header, and the projection(s) according to one or several data categories. The data structure is then processed either automatically or manually so as to determine a category associated to the column header.

The following subsections detail the functioning of the components according to a specific embodiment.

5.2. Description of a specific embodiment

In this embodiment, the objective is to determine, for one or more tables of a database, whether the data which is inserted in these tables are personal data within the meaning of the GDPR. To do this, as explained previously, we process table by table and column by column to determine whether the data present in a column of a table are likely to be personal data or not. In this embodiment, therefore, the only final categorization sought is personal data. Thus, within the meaning of the general mode of realization presented previously, the projection carried out by the text classifier (ClassF) module and the random forest classifier (RFC) is a one-dimensional projection.

However, the metadata extracted from the database, is not specifically associated with determining belonging to the 'personal data' category and could also be used to determine belonging in other categories of data.

*5.2.1. Extraction from the database in an implementation of the data extractor module* (*MetEx*)

The extraction process assumes the table to contain a certain number of columns, of which an unknown number contain personal data. From those columns, the following metadata are extracted:

- Name of the table (or unique context identifier, indeed: a table exists in a schema. A table with the same name may exists in another schema in the same or in another database. So, when collecting meta data classifications on an enterprise level typically a unique context identifier is used instead of a table name to reference exactly one table in a specific environment, in a specific database, and in a specific schema);
- Number of rows in the table;
- Name of the column (for each column or a subset of columns);
- Number of instances in the column (for each column or a subset of columns);

- Average row length of the table/context;
- Number of distinct values in the column (for each column or a subset of columns);
- Number of null/empty values in the column (for each column or a subset of columns);
- Average column length (for each column or a subset of columns);
- Data type.

These metadata may be extracted for each column of the table or a subset of columns of the table. Actually, this depends on the implementations, since for example this extraction may be done several times on the same table, for example, when an update of an initial projection is made is made, or for any other reason linked to the implementation. As already explained, it is possible to perform this analysis on non-tabular data structures, as long as the same metadata is provided for each field. Extraction, however, might be more complex, but this can be made thru a specific API, as explained above.

An example is provided for a fictious table ADDRESSES:

| NAME | STREET | NUMBER | TELEPHONE | COUNTRY | CONTINENT |
|---|---|---|---|---|---|
| Gael | Rue A | 20 | | Country 1 | Europe |
| Jan | Straat B | 1 | 111122233 | Country 2 | Europe |
| Xavier | Street C | 5 | | Country 2 | Europe |

- Name of the table: In this case, the name is ADDRESSES for all of the columns, since all columns belong to the table ADDRESSES;
- Name of the column: These are the column headers: NAME, STREET, NUMBER, TELEPHONE, COUNTRY, CONTINENT;
- Number of instances (rows) in the column: In this case, we are dealing with a tabular database, the number of instances is *three for each and every column except for column "telephone" in which it is one.*
- Average row length of the table: Average length, in bytes, of the rows in the table. In this example above, one has three rows; The total row length is computed for each row, and the average row length is calculated. All columns within a table have the same value for this feature, since it is associated to a table and not to an individual column;
- Average column length: Average length, in bytes, of the rows in the column. Similar to the previous example, but in this case the average is computed per column, not across the whole table. Each column therefore has a different value (for column "NAME", the Average column length would thus be: (4+3+6)/3=4,333...);
- Number of distinct values in the column: The number of unique values in each column. In this example, the column NAME has 3 different names. The column COUNTRY has 2 different countries (one of them is repeated). The column CONTINENT only has one unique value that is repeated for all rows
- Number of null/empty values in the column: Like its name indicates. In this example, only the column TELEPHONE has 2 null values.
- Data type: Extracting the data type of the column.

Once the extraction is done, the data extractor module (*MetEx*) routes extracted metadata, to the Text classification module for the column header name (and associated table name if needed). Other metadata are routed to the compiler module (*Comp*) for processing and enrichment.

5.2.2. Data enrichment by the compiler module (Comp)

As previously explained, the objective of the compiler is to derive, from extracted metadata, relevant elements which will be fed to the Random Forest Classifier module (RTC), so as to make a final projection of the category of the data contained in a current column.

In this embodiment, the following features are compiled, for each column or a subset of column, from the extracted metadata:

$$DR = \frac{NdVCC}{NiCC - NnVCC}$$

- The distinct Ratio calculated from:

  - number of distinct values in the current column NdVCC;
  - number of instances in the current column NiCC;
  - number of null/empty values in the current column NnVCC.

- The Percentage of nulls $PN = \dfrac{\text{NnVCC}}{NiCC}$

- The data types are mapped to 4 boolean values, which represent whether the type is a number, a character, a date and a large blob (more than 1000 characters). E.g., both an integer and a float type are mapped to "number".

As an example, for table ADDRESSES:

- Distinct ratio (DR): Number of distinct values / (Number of rows- Number of nulls):

  - For example, in the country column there are 2 distinct values (country 1 and country 2). 3 rows, and 0 nulls. So the distinct ratio would be 2/3 = 0.667;
  - In the TELEPHONE column, the distinct ratio is 1: 1 distinct value, 3 rows, 2 nulls. 1/(3-2) = 1

- Percentage of nulls (PN): The number of nulls divided by the total number of rows. Going again with the TELEPHONE example, the percentage of nulls would be 2/3 = 0.667;
- Boolean data types: The data type of the column is transformed into four Boolean features: is_number, is_character, is_date and is_large_blob. Large blobs are character columns of more than 1000 characters. In our example, the column NUMBER would be numerical. So for this column, is_number = 1, and is_character, is_date and is_large_blob = 0. For a character column such as NAME, is_character = 1, and is_number, is_date and is_large_blob = 0.

All or part of the extracted features are used as inputs for a Random Forest Classifier module. More specifically, the final random forest classifier module uses, in this embodiment, the following features (by order of importance):

- Distinct Ratio;
- Average column length;
- Average row length;
- Number of Rows;
- Percentage of Nulls;
- The four Boolean data types;

Indeed, the inventors have established, by research, that these features, computed from the metadata, are the most important ones so as to make a better projection. Among these features, Distinct Ratio and Average column length are the ones which supports the most the final decision of the Random Forest module. More specifically, Distinct Ratio is more likely to make a difference in final projection, in combination with the preliminary data category obtained from the text classifier.

5.2.3. Text classification module and Random forest classifier modules

Using the data extraction process outlined above, a training dataset is generated. For each instance of the training dataset, a label is known (whether it contains personal data or not). The system is then used to train two machine learning modules (a text classifier and a random forest classifier).

These modules can then be used to make predictions on previously unseen data.

The trained modules, however, have a certain bias due to the context with which they have been trained. As a basic example, in a dataset containing information about multinational companies, the word COMPANY will generally refer to a column that does not contain personal data. However, if the dataset contains information about small businesses, the name of the company will often be the name of a single person.

A module trained with the multinational companies dataset is very likely to assign high probabilities to columns containing COMPANY in their header, which will not be the case for a module trained with the small businesses dataset. The accuracy of the system will therefore be lower if predictions are made on datasets coming from contexts different from that with which the module was trained.

Due to these characteristics, the proposed system is best used within a framework that allows for streamlined data harvesting and classification; this allows for the creation and storage of different modules related to different contexts, so that when a new batch of unseen data needs to be predicted on the most adequate module can be used.

It is thus desirable to improve the ability of the module to make good projections.

A key feature is that once predictions have been made, the user can verify their accuracy. If the quality of a certain prediction is deemed accurate enough, the dataset used can be incorporated to the already existing data within that context and used to re-train the module. With more iterations, more data is added to the training dataset, which in turn increases the accuracy of the trained modules.

A prediction is made with a module that had been previously trained; once the prediction is verified by a user, it is used as the labels for the data that generated it. This newly added dataset (data + predictions) can now be used to re-train the module and improve its performance. 5.2.3.1. Text classification module.

Text analysis of the column headers names allows extracting a context from them. The classifier first needs to be trained, meaning that it is necessary to use labelled examples that the classifier will learn from (i.e. samples of column headers for which the presence or absence of personal data is already known). Because each domain has a specific context associated, performance will be highest when the text classifier is used to make projections on a dataset from the same context on which it has been trained. The text classifier is also language-specific.

In a specific implementation, the open source fastText library was used for building the text classification module. However, it is possible to use a different one, or even develop a new classifier from scratch. The exact settings for the current best-performing solution are as follows: learning rate = 1, minimum and maximum string size: 1 and 10 respectively, number of epochs: 10.

### 5.2.3.2. Random forest classifier module

This module takes as inputs the enriched database statistics and the projections generated by the text classification module. Similar to the text classification module, the random forest module needs to be trained with labelled samples before it can make predictions on unseen data. In this embodiment, focused on 'personal data', columns header with predictions close to 1 are considered likely to contain personal data. Predictions close to zero are considered non personal data. Intermediate prediction values will need manual evaluation. This is typical a small subset of all data items evaluated. Setting boundaries for which subset needs manual evaluation depends on the risk appetite of an organization.

Since the Random forest classifier module is based on a supervised learning algorithm, this means it is trained by feeding it a number of pairs consisting of an input (the features previously described) and a desired output (in this case, whether it is personal data or not). Based on these input-output pairs, the model develops a series of logical rules that allow it to predict the output based on the input; once it is trained, it can be fed further inputs, and it will produce its own output based on the learned logic.

In present case, the output is a number between 0 and 1 which represents the probability of a certain input to contain personal data.

For the random forest, the *scikit-learn* package from Python can for example be used, specifically the *RandomForestClassifier* function with 100 estimators.

### 5.3. Other features and advantages

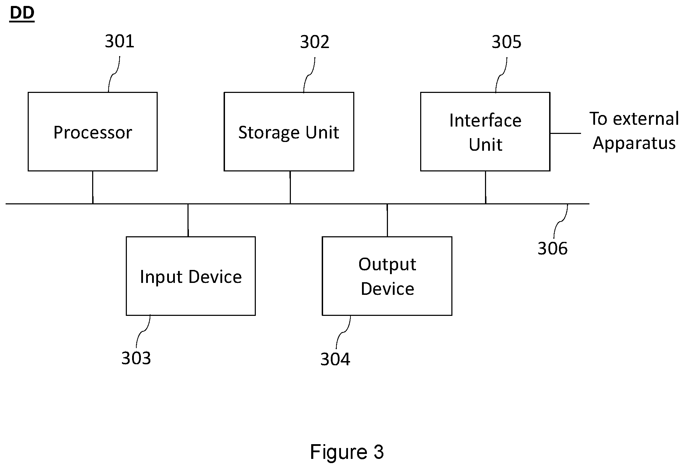

Figure 3 shows a schematic block diagram illustrating an example of a device DD according to an embodiment of the present disclosure. In some embodiments, the device DD is connected to or embedded into a communication device (development environment, database server, cloud-based service) configured for processing database. In another embodiment, the device DD is implemented on a cloud infrastructure service, alongside with a distant database server for example. Whatever the embodiment considered, the device DD is connected to Database server, either directly or indirectly through a communication device.

Referring back to figure 3, the device DD includes a processor 301, a storage unit 302, an input device 303, an output device 304, and an interface unit 305 which are connected by a bus 306. Of course, constituent elements of the device DD may be connected by a connection other than a bus connection using the bus 306.

The processor 301 controls operations of the device DD. The storage unit 302 stores at least one program to be executed by the processor 301, and various data, including for example parameters used by computations performed by the processor 301, intermediate data of computations performed by the processor 301 such as basic database statistics, column headers of various tables. The processor 301 is formed by suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a method for detecting an audio adversarial attack with respect to a voice input processed by an automatic speech recognition system according to an embodiment of the present disclosure as described previously. More particularly, the program causes the processor 301 to perform statistics extraction and compilation from the database, text classification on the basis of column headers, and final projection, thanks to random forest module to a predetermined category on the basis of enriched statistics and preliminary data categories.

The input device 303 is formed for example by a keyboard or a mouse, when needed.

The output device 304 is formed for example by a processing unit configured to take decision regarding whether or not a column header is considered as belonging to a predetermined category, as a function of the result of the final projection for this column and for example a predetermined threshold.

The interface unit 305 provides an interface between the device DD and an external apparatus and/or system. The interface unit 305 is typically a communication interface allowing the device to communicate with other devices connected to a network, such as database servers. The interface unit 305 may be used to obtain the database statistics thru a dedicated API. The interface unit 305 may also be used to transmit a result of a projection, for a column or a set of columns of one or several tables in a database.

Although only one processor 301 is shown on figure 3, it must be understood that such a processor may include different modules and units embodying the functions carried out by device DD according to embodiments of the present disclosure. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above.

**Claims**

1. A method of processing data from a data source, said processing method being implemented via an electronic device for processing data sources, said data source being in the form of a database comprising at least one table, said at least one table comprising at least one column, said method comprising the following steps:

   - An extraction step (A01) of metadata from said at least one table, delivering, on the one hand, a set of data representative of statistics relating to the content of said at least one table (DBs) and, on the other hand, a set of column headers names (ColH) of said at least one table; and
   - A compilation step (B02) of at least part of the data representative of statistics of said set of data representative of statistics, delivering enriched statistical data (ESD);
   - A classification step (B03), via a text classification module, from the set of column headers names of said at least one table, the classification step (B03) delivering, for each column of said at least one table, data representing a probability that each column belongs to a preliminary data category (PreDC); and
   - For each column belonging to a preliminary data category, a prediction step (C04), from enriched statistical data (ESD) *and* data representing the probability of each column belonging to a preliminary data category (PreDC), delivering a membership score for each column to belong to a predetermined category (DC).

2. Processing method according to claim 1, **characterized in that** said set of data representative of statistics relating to the content of said at least one table (DBs) obtained in said metadata extraction step (A01) comprises, for a current column having a current column header name:

   - number of instances in the current column NiCC;
   - number of distinct values in the current column NdVCC;
   - number of null/empty values in the current column NnVCC.

3. Processing method according to claim 2, **characterized in that** enriched statistical data obtained by the compilation step (B02) of at least part of the data representative of statistics of said set of data representative of statistics comprises calculating, for a current column having a current column header name, a Distinct Ratio *DR* in the form:

$$DR = \frac{\text{NdVCC}}{\text{NiCC} - \text{NnVCC}}$$

4. Processing method according to claim 2, **characterized in that** enriched statistical data obtained by the compilation step (B02) of at least part of the data representative of statistics of said set of data representative of statistics comprises calculating, for a current column having a current column header name, a Percentage of nulls PN in the form:

$$PN = \frac{\text{NnVCC}}{\text{NiCC}}$$

5. Processing method according to claim 1, **characterized in that** the classification step (B03), by means of a text classification module, from the set of column headers names of said at least one table comprises feeding each column header name to a pretrained text classification module as a function of a context of said table and/or said database to which each column belongs.

6. Processing method according to claim 5, **characterized in that** at least part of the probabilities that some column belongs to a preliminary data category (PreDC) are used as input of said text classification module so as to increase accuracy of said text classification module.

7. Processing method according to claim 1, **characterized in that** the prediction step (C04) comprises, for a current column of said set of column headers, feeding said data representing the probability that said current column belongs to a preliminary data category and said enriched statistical data of said current column to pretrained Random Forest classifier module.

8. Processing method according to claim 7, **characterized in that** at least part of the probabilities that some column belongs to a predetermined data category (DC) are used as input of Random Forest classifier module so as to increase accuracy of said Random Forest classifier module.

9. The method, according to claim 1, **characterized in that** it is implemented in real time by monitoring changes made in a data structure of said database.

10. The method according to claim 1, **characterized in that** said extraction step (A01) of metadata comprise connecting to the data source thru the use of an API, said API preventing unauthorized access to content of said data source.

11. An electronic device for processing data from a data source, said data source being in the form of a database comprising at least one table, said at least one table comprising at least one column, said device comprising:

    - extraction means (MetEx) of metadata from said at least one table, delivering, on the one hand, a set of data representative of statistics relating to the content of said at least one table (DBs) and, on the other hand, a set of column headers names (CoIH) of said at least one table; and
    - compilation means (Comp) of at least part of the data representative of statistics of said set of data representative of statistics, delivering enriched statistical data (ESD);
    - a text classification module, delivering, from the set of column headers names of said at least one table, for each column of said at least one table, data representing a probability that each column belongs to a preliminary data category (PreDC); and
    - a prediction module (RFC), which for each column belonging to a preliminary data category, delivers a membership score for each column to belong to a predetermined category (DC), using enriched statistical data (ESD) and data representing the probability of each column belonging to a preliminary data category (PreDC).

12. A computer program product downloadable from a communication network and/or recorded on a medium readable by a computer and/or executable by a processor, comprising program code instructions for implementing a method according to any one of claims 1 to 9.

13. A non-transitory computer-readable medium comprising a computer program product recorded thereon and capable of being run by a processor, including program code instructions for implementing a method according to any one of claims 1 to 9.

Figure 1

Figure 2

DD

301 302 305

| Processor | Storage Unit | Interface Unit | — To external Apparatus |

Input Device | Output Device

303 304

306

Figure 3

Europäisches
Patentamt

European
Patent Office

Office européen
des brevets

**EUROPEAN SEARCH REPORT**

Application Number

EP 20 21 5583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/138509 A1 (VON RICKENBACH DAVID [CH] ET AL) 9 May 2019 (2019-05-09)<br>* paragraph [0045] - paragraph [0047] *<br>* paragraph [0057] *<br>* figure 1 *<br>----- | 1-13 | INV.<br>G06F16/28 |

TECHNICAL FIELDS
SEARCHED    (IPC)

G06F

The present search report has been drawn up for all claims

| Place of search | Date of completion of the search | Examiner |
|---|---|---|
| The Hague | 3 May 2021 | Rameseder, Jonathan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 5583

This annex lists the patent family members relating to the patent documents cited in  the above-mentioned European search report.
The members are as contained in the European Patent Office EDP file on
The European Patent Office is in no way liable for these particulars which are merely given for the purpose of information.

03-05-2021

| Patent document cited in search report | | | Publication date | Patent family member(s) | | Publication date |
|---|---|---|---|---|---|---|
| US 2019138509 | A1 | | 09-05-2019 | AU 2018372633 | A1 | 07-05-2020 |
| | | | | CA 3082237 | A1 | 31-05-2019 |
| | | | | EP 3707665 | A2 | 16-09-2020 |
| | | | | US 2019138509 | A1 | 09-05-2019 |
| | | | | US 2021026823 | A1 | 28-01-2021 |
| | | | | WO 2019102270 | A2 | 31-05-2019 |

EPO FORM P0459

For more details about this annex : see Official Journal of the European Patent Office, No. 12/82